# FASCICULE DE BREVET EUROPEEN

(11) **EP 3 654 111 B1**
(45) Date de publication et mention de la délivrance du brevet: **16.02.2022**
(21) Numéro de dépôt: 18206381.8
(22) Date de dépôt: 15.11.2018
(51) Int. Cl.: G04D 7/10

(54) **PROCÉDÉ DE MESURE DE COUPLE D'UN SPIRAL D'HORLOGERIE ET SON DISPOSITIF**
VERFAHREN ZUR MESSUNG DES DREHMOMENTS EINER SPIRALFEDER EINER UHR
METHOD FOR MEASURING THE TORQUE OF A CLOCK HAIRSPRING AND DEVICE FOR SUCH METHOD OF MEASUREMENT

(43) Date de publication de la demande: 20.05.2020
(73) Titulaire: Nivarox-FAR S.A., 2400 Le Locle (CH)
(72) Inventeur: GIUSTO, Nicola, 2400 Le Locle (CH); BALOSSI, Joseph, 25130 Villers-le-Lac (FR); FAHRNI, François, 2400 Le Locle (CH); CRETENET, Davy, 25650 La Chaux-de-Gilley (FR)
(74) Mandataire: ICB SA

(56) Documents cités:
- EP-A1- 2 128 723
- EP-B1- 2 423 764
- JP-A- H06 109 592

## Description

### Domaine de l'invention

L'invention concerne un procédé de mesure de couple d'un spiral d'oscillateur d'horlogerie, enroulé autour d'un axe de spiral et comportant une virole à son extrémité interne, et une spire externe à son extrémité externe, ladite virole comportant une ouverture avec une ouverture dont la surface intérieure comporte des surfaces de centrage qui sont agencées pour coopérer avec un arbre de révolution autour dudit axe de spiral et pour centrer ledit spiral sur un tel arbre, et qui, à l'état libre dudit spiral, définissent un diamètre de passage.

L'invention concerne encore un posage pour la mise en oeuvre d'un tel procédé de mesure de couple d'un spiral, notamment en matériau micro-usinable ou en silicium.

L'invention concerne la fabrication et la mise au point des oscillateurs d'horlogerie comportant des ressorts spiraux, et plus particulièrement des spiraux en matériau micro-usinable ou en silicium.

### Arrière-plan de l'invention

Le maintien en position angulaire et verticale de la virole d'un spiral en silicium, ou similaire, lors de la mesure du couple du spiral est actuellement réalisé par un arbre cylindrique. Le diamètre de cet arbre cylindrique est défini en fonction du diamètre intérieur inscrit au niveau de la virole. Le maintien en position angulaire et verticale de la virole du spiral, lors de la mesure du couple du spiral, est obtenu par un serrage de la virole sur l'arbre cylindrique. Ce serrage est obtenu par la déformation élastique de la virole. La valeur du serrage est définie en fonction du diamètre de l'arbre.

Cette méthode de travail usuelle présente toutefois des inconvénients :
- risque d'égrisure, c'est-à-dire de micro-cassure au niveau d'une arête. Le silicium étant connu pour être un matériau très fragile sous contrainte mécanique, une insertion par chassage en automatique de la virole d'un spiral silicium sur un faux arbre de profil cylindrique traditionnel, défini pour garantir son maintien en position lors de la mesure du couple du spiral, peut générer des tensions dans la matière du spiral. Ces tensions néfastes peuvent entraîner un risque d'égrisure du spiral générateur de défauts produits. Cette égrisure peut se révéler très critique car elle peut induire une amorce de rupture au niveau de la virole avec un risque de casse de celle-ci qui sera détectée plus tard lors de la mise en mouvement ;
- usure et pollution de l'arbre cylindrique de l'outillage. Le principe du faux arbre à profil de cylindre entraîne un frottement entre virole et faux arbre, lors de l'insertion et du retrait de la virole du spiral du faux axe. Sur un process automatique, ce frottement répété sur de multiples spiraux entraîne une usure qui peut être une source de pollution du faux arbre, et donc du spiral. Cette pollution est critique au niveau qualité produit final. Ce frottement répété modifiera aussi le profil du faux arbre avec une influence directe sur la tenue en position angulaire et verticale du spiral lors de la mesure du couple, avec pour conséquence induite une perte de précision de la mesure du couple du spiral ;
- difficulté de garantir la précision d'alignement entre la virole et le système de mesure du couple. Le principe du faux arbre cylindrique nécessite un alignement de grande précision entre le préhenseur qui maintient le spiral lors de l'insertion et le faux axe. Un mauvais alignement a pour conséquence de créer et générer un impact ou choc sur la virole lors de l'insertion sur le faux arbre, avec un risque important d'égrisure;
- difficulté de maintenir correctement la virole, avec un bon référencement angulaire et vertical. Sur un faux arbre de type cylindrique, le maintien et le référencement angulaire et vertical du spiral sont réalisées par un design spécifique du faux arbre, afin de garantir un léger serrage de la virole sur le faux axe. Ce serrage générateur de contrainte dans la virole dépend des variations de tolérance de fabrication du faux arbre et de la virole du spiral. De plus, les multiples insertions de la virole sur le faux arbre cylindrique risquent de provoquer sur ce dernier une usure par brochage, générant une orientation angulaire forcée et un jeu entre la virole et le faux arbre, altérant la précision de mesure.

Le document EP2423764B1 propose une solution pour remédier à ces différents inconvénients, par l'utilisation d'un arbre fendu en lieu et place de l'arbre cylindrique usuel : cet arbre fendu est pincé pour permettre l'insertion de la virole, et libéré dans une position adéquate de la virole pour la mesure de couple du spiral, lequel est maintenu par l'effort de rappel élastique de l'arbre fendu. Toutefois, la virole subit donc encore une contrainte, pendant le cycle de mesure de couple, ce qui fausse cette mesure, et/ou ce qui peut être source d'égrisure. Ce principe nécessite de plus un alignement précis de la pince pour éviter une déformation sur l'axe de mesure, et donc une perturbation de la mesure.

### Résumé de l'invention

L'invention se propose de mettre au point une nouvelle méthode de maintien en position angulaire et verticale selon le champ de gravité de la virole d'un spiral d'horlogerie, et tout particulièrement d'un spiral en matériau micro-usinable ou en silicium, lors de la mesure du couple de ce spiral sur un posage conçu pour un process de mesure automatique, avec une déformation minimale du spiral, autre que celle due à l'oscillation.

La solution proposée par l'invention utilise un principe statique de maintien du spiral au niveau de son extrémité interne.

Ainsi, l"invention concerne un procédé de mesure de couple d'un spiral d'oscillateur d'horlogerieselon la revendication 1.

L'invention concerne encore un posage pour la mise en oeuvre d'un procédé de mesure de couple d'un spiralselon la revendication 21.

### Description sommaire des dessins

D'autres caractéristiques et avantages de l'invention apparaîtront à la lecture de la description détaillée qui va suivre, en référence aux dessins annexés, où :

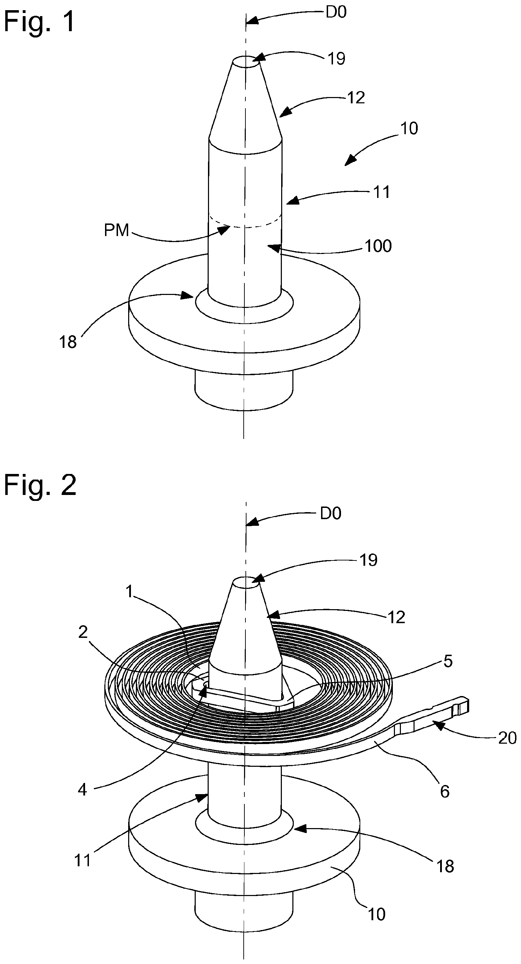

- la figure 1 représente, de façon schématisée, et en perspective, un faux arbre, en forme d'obélisque, et propre à l'invention, que comporte un outillage principal d'un posage agencé pour la mesure du couple d'un spiral d'oscillateur d'horlogerie;
- la figure 2 représente, de façon similaire à la figure 1, le même faux arbre, sur lequel porte la virole d'un spiral, dont la spire externe est maintenue par un outillage de maintien agencé pour la préhension de cette spire externe ;

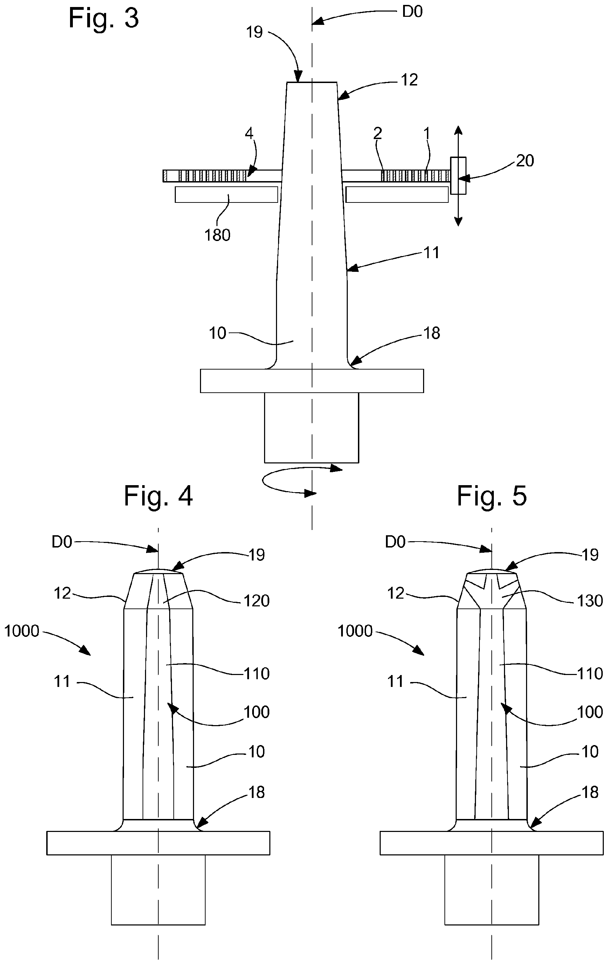

- la figure 3 représente, de façon schématisée et en coupe passant par l'axe du faux arbre de la figure 1, le faux arbre et l'outillage de maintien porteurs du spiral, et des outillages annexes, inférieur et supérieur, chacun agencé pour exercer un effort de poussée axial sur ce spiral ;
- la figure 4 représente, de façon schématisée, et en élévation, un faux arbre, en forme d'obélisque et comportant des plats obliques de guidage et/ou d'entraînement, aussi bien au niveau d'un fût inférieur de maintien du spiral, que dans un fût supérieur d'insertion du spiral ;
- la figure 5 représente, de façon schématisée, et en élévation, un faux arbre, en forme d'obélisque et comportant de tels plats obliques au niveau d'un fût inférieur de maintien du spiral, et des gorges spiralées au niveau d'un fût supérieur d'insertion du spiral ;

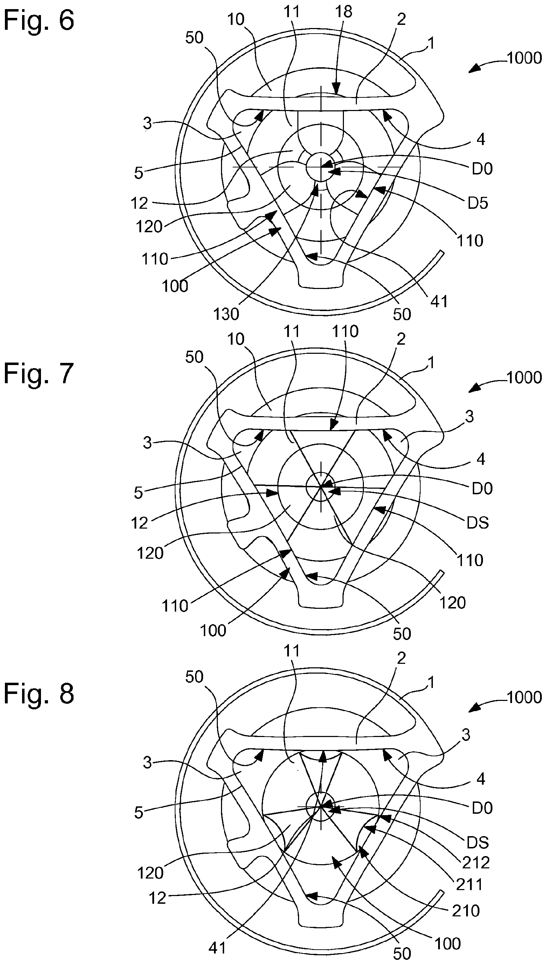

- la figure 6 représente, de façon schématisée, et en vue de dessus partielle, le faux arbre de la figure 5 porteur d'un spiral ;
- la figure 7 représente, de façon schématisée, et en vue de dessus partielle, le faux arbre de la figure 4 porteur d'un spiral ;
- la figure 8 représente, de façon schématisée, et en vue de dessus partielle, un faux arbre voisin de celui de la figure 5 mais comportant des gorges rectilignes au lieu de plats, et porteur d'un spiral ;

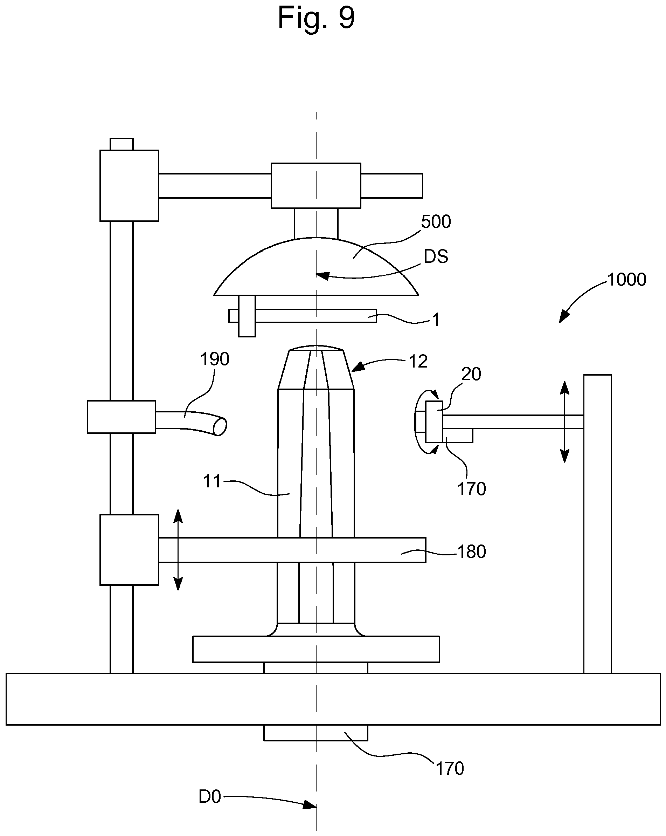

- la figure 9 représente, de façon schématisée, et en élévation, un posage comportant le faux arbre de la figure 4, l'outillage de maintien de la figure 2, les outillages annexes de la figure 3, ainsi qu'un préhenseur agencé pour manipuler un spiral.

### Description détaillée des modes de réalisation préférés

L'invention concerne la méthode de maintien en position angulaire et verticale selon le champ de gravité de la virole d'un spiral 1 d'horlogerie, notamment mais non limitativement en matériau micro-usinable, silicium, silicium et dioxyde de silicium, DLC, verre métallique, autre matériau au moins partiellement amorphe, ou similaire, lors de la mesure du couple du spiral sur un posage conçu pour un process de mesure automatique, avec une déformation minimale du spiral, autre que celle due à l'oscillation.

La solution proposée par l'invention utilise un principe statique de maintien du spiral au niveau de son extrémité interne. Il s'agit de s'affranchir de toute contrainte imprimée à la virole du spiral par un outillage de maintien, et, ainsi, d'éviter de créer des contraintes parasites dans les spires actives du spiral, et d'éviter de modifier la longueur active réelle du spiral.

L'invention repose sur l'utilisation d'un posage 1000 particulier, qui comporte un outillage principal qui comporte, en lieu et place d'un arbre cylindrique traditionnel, ou encore d'un arbre fendu ou d'un arbre élastique, un faux arbre 10, spécialement conçu pour une dépose en douceur d'une virole 2 d'un tel spiral 1 par un préhenseur 500, ou par un opérateur, pour un bon centrage de cette virole sur l'axe DO du faux arbre 10, et pour un entraînement en rotation, à contrainte minimale, du faux arbre 10 relativement à un outillage de maintien agencé pour la préhension et le maintien de la spire externe 6 de cet spiral 1.

Le profil du faux arbre 10 est de préférence de type obélisque, et comporte au moins deux zones qui ont chacune un rôle bien défini pour garantir le bon déroulement du process de mesure de couple, à contrainte parasite minimale.

Le faux arbre 10 comporte une première zone, dite supérieure. Plus particulièrement, mais non limitativement, cette première zone comporte une partie conique autour d'un axe DO; dans d'autres variantes elle peut comporter au moins une partie de révolution, autour de cet axe DO, à profil parabolique, elliptique, ou autre, ou encore combiner plusieurs surfaces de révolution autour du même axe DO.

Cette première zone constitue l'interface entre d'une part un préhenseur 500, aussi dénommé « pick & place » (prise et placement), qui peut être un robot ou similaire, qui est agencé pour transporter le spiral 1, et d'autre part une deuxième zone qui est une zone de maintien du spiral 1 pendant la mesure de couple.

On comprend que l'invention, prévue pour une automatisation maximale, est aussi conçue pour un usage de laboratoire où un opérateur humain manipule le ressort 1. Cette variante d'utilisation n'est pas ici décrite en détail, le préhenseur 500 comporte alors classiquement une paire de brucelles. La suite de l'exposé utilise la notion au sens large de préhenseur 500.

La première zone a deux fonctions principales:
- l'échange et transfert du spiral 1 depuis le préhenseur 500 sur le faux arbre 10 sans exercer d'effort sur la virole 2 du spiral 1 ;
- le recentrage du spiral 1 sur le faux arbre 10 ; le profil autorise une latitude de positionnement, par exemple une erreur angulaire maximale possible de +/-20° du spiral sur le préhenseur 500 par rapport au faux arbre10.

Cette première zone est prolongée, en partie inférieure du posage 1000, par une deuxième zone, dite inférieure, qui comporte une forme spécifique, avec un profil qui est défini pour garantir trois fonctions principales:
- le positionnement précis et répétable du spiral 1 sur le poste de mesure du couple du spiral ;
- le maintien en position angulaire et verticale selon le champ de gravité de la virole 2 du spiral 1 lors de la mesure du couple du spiral sur le faux arbre 10 ;
- la précision au niveau de la mesure du couple du spiral 1.

Ainsi, plus particulièrement, l'invention concerne un procédé de mesure de couple d'un spiral 1 d'oscillateur d'horlogerie, notamment en matériau micro-usinable, ou en silicium, ou matériau similaire, ce spiral 1 comportant une virole 2 à son extrémité interne, et une spire externe 6 à son extrémité externe. La virole 2 comporte classiquement une ouverture 3 qui comporte, à l'état libre du spiral 1, une surface intérieure 4. Plus particulièrement cette surface intérieure 4 comporte au moins un plat, ou bien est sensiblement polygonale autour de l'axe de spiral DS du spiral 1 autour duquel le spiral 1 est enroulé selon un contour polygonal 5 à N côtés en projection sur cet axe de spiral DS. De façon plus générale, la surface intérieure 4 de l'ouverture 3 comporte des surfaces de centrage 41, qui sont agencées pour coopérer avec un arbre de révolution autour de l'axe de spiral DS et pour centrer le spiral 1 sur un tel arbre ; ces surfaces de centrage définissent un diamètre de passage DP à l'état libre du spiral 1. Plus particulièrement elles sont tangentes à un cylindre géométrique de révolution autour de l'axe de spiral DS définissant ce diamètre de passage DP.

Selon l'invention :
- on détermine les dimensions de la surface intérieure 4 ou du diamètre de passage DP;
- on choisit, en fonction des dimensions, un outillage principal comportant un faux arbre 10 en forme d'obélisque de section décroissante depuis sa base 18 en partie inférieure, vers son sommet 19 en partie supérieure, selon un axe d'outillage DO.

Ce faux arbre 10 comporte en partie supérieure une première zone supérieure avec un guide d'insertion 12 dont toute section, en projection sur un plan perpendiculaire à l'axe d'outillage DO, s'inscrit à l'intérieur de l'ouverture 3 de la virole 2, notamment s'inscrit à l'intérieur de la surface intérieure 4 ou du contour polygonal 5. Le guide d'insertion 12 est agencé pour un premier centrage d'une virole 2 d'un spiral 1, qui est déposé au niveau de la partie supérieure, au niveau du sommet 19, et qui est laissé libre de glisser sous son propre poids le long du guide d'insertion 12. Le faux arbre 10 est de section toujours croissante, selon l'axe d'outillage DO rectiligne, depuis son sommet 19 en partie supérieure où le diamètre enveloppe du faux arbre 10 est inférieur au diamètre de passage DP, vers sa base 18.

Le guide d'insertion 12 surmonte une deuxième zone inférieure, qui comporte au moins un fût inférieur 11 de forme sensiblement tronconique agencé pour achever l'auto-centrage d'une virole 2 selon l'axe d'outillage DO, et pour maintenir sans contrainte un spiral 1 sur le fût inférieur 11. Par forme « sensiblement tronconique » on entend que ce fût inférieur 11 comporte de préférence des surfaces de révolution autour de l'axe d'outillage D0, qui ne sont pas nécessairement complètement de révolution c'est-à-dire qu'elles sont des secteurs coniques ou similaires régulièrement disposées angulairement, voir même des arêtes régulièrement disposées angulairement; comme exposé plus haut la forme conique représentée sur les figures est une forme particulière, mais le profil peut être parabolique, elliptique, ou autre, ou encore combiner plusieurs courbes de nature différente, l'important étant une bonne tangence de ces courbes entre elles pour faciliter un glissement libre de la virole 2 sur ce fût inférieur 11, et au auto-centrage de la virole sur l'axe d'outillage DO.

Dans une réalisation particulière, le guide d'insertion 12 est sensiblement inscrit dans un cône, avec un angle de cône supérieur compris entre 5° et 45°, plus particulièrement entre 10° et 20°, plus particulièrement encore entre 14° et 16°.

Dans une réalisation particulière, le fût inférieur 11 est sensiblement inscrit dans un cône, avec un angle de cône inférieur qui est supérieur à 0°et inférieur à 10°, plus particulièrement compris entre 0.5° et 3°, plus particulièrement encore entre 0.5° et 1.5°.

Le fût inférieur 11 comporte des moyens d'entraînement 100, qui sont agencés pour coopérer avec une surface intérieure 4 d'une virole 2 pour l'entraînement en rotation, sans glissement, du faux arbre10 par une virole 2 ou inversement; dans la réalisation illustrée ces moyens d'entraînement 100 sont, ou bien un plat agencé pour coopérer avec celui de la surface intérieure 4 de la virole 2, ou des premiers plats 110 agencés pour coopérer avec ceux du contour polygonal 5 de la surface intérieure 4 de la virole 2, ou bien un dégagement agencé pour coopérer avec le plat de la surface intérieure 4 de la virole 2, ou des premiers dégagements 210, par exemple des gorges ou rainures longitudinales, qui sont agencés pour coopérer avec le contour de la surface intérieure, ou avec les plats du contour polygonal 5 quand c'est le cas, pour leur entraînement relatif quand un couple est appliqué au spiral 1. Ces premiers plats 110, ou des premiers dégagements 210, ou autres surfaces encore, sont de préférence chacun symétrique par rapport à un plan passant par l'axe d'outillage DO, et l'orientation angulaire de l'intersection de chacune de ces surfaces constituant ces moyens d'entraînement 100, dans un tel plan passant par l'axe d'outillage DO, et par rapport à l'axe d'outillage DO, est la même.

On aligne ensuite l'axe d'outillage DO sur la verticale du lieu selon le champ de gravité.

Puis on saisit le spiral 1 avec un préhenseur 500, avec lequel on dépose par simple gravité le spiral 1 à mesurer sur le guide d'insertion 12, et on laisse choir le spiral 1 sur le fût inférieur 11 jusqu'à son arrêt sous l'effet de son seul poids, dans une position axiale d'auto-centrage dénommée position de mesure.

On vérifie alors la coaxialité de l'axe de spiral DS du spiral 1 avec l'axe d'outillage DO, dans la position de mesure. Plus particulièrement, quand l'axe de spiral DS du spiral 1 n'est pas aligné avec l'axe d'outillage DO, dans la position de mesure, on exerce sur le spiral 1 une poussée avec un outillage plan inférieur 180 depuis la base 18 vers le sommet 19 ou inversement, selon l'axe d'outillage DO, pour repositionner le spiral 1 dans sa position de mesure, et on réitère la mise en position, sous son seul poids, du spiral 1 jusqu'à alignement de l'axe de spiral DS avec l'axe d'outillage DO.

Quand l'axe de spiral DS du spiral 1 est aligné avec l'axe d'outillage DO, dans la position de mesure, on met en place, à hauteur de la position de mesure selon la direction de l'axe d'outillage DO, un outillage de maintien 20 qui est agencé pour la préhension de la spire externe 6 du spiral 1, et on fixe la spire externe 6 à l'outillage de maintien 20.

On effectue alors, à l'aide de moyens de mesure 170, une mesure de couple du spiral 1 par mise en rotation, autour de l'axe d'outillage DO, de l'outillage principal et/ou de l'outillage de maintien 20, sans contrainte du spiral 1.

La position de mesure peut comporter un écart selon la direction verticale du champ de gravité entre la virole 2 et la spire externe 6 : le spiral 1 peut être intentionnellement mis en position dite de parapluie, où il a une enveloppe sensiblement conique, et l'outillage de maintien 20 est réglable verticalement à cet effet, permettant de placer la spire externe 6 au-dessus ou en-dessous de la virole 2, selon la gamme opératoire retenue. Selon la gamme de mesure à appliquer, on effectue le réglage de position en hauteur de l'outillage de maintien (20 pour, ou bien maintenir le spiral 1 dans un plan, ou bien lui donner une forme en parapluie, ascendante, ou descendante, selon une valeur prédéterminée de déport et inférieure à quatre fois la hauteur des spires du spiral 1. Plus particulièrement on effectue ce réglage de position en hauteur de l'outillage de maintien 20 pour donner audit spiral une forme en parapluie, selon une valeur prédéterminée de déport inférieure ou égale à la hauteur des spires du spiral 1.

Selon la gamme de mesure à appliquer, on oriente si nécessaire l'outillage de maintien 20 de façon à donner un léger vrillage de valeur prédéterminée à la spire externe 6 du spiral.

Plus particulièrement, après la mesure, on entraîne le spiral 1 au-dessus du sommet 19 pour son évacuation, par une translation de l'outillage de maintien 20 parallèlement à l'axe d'outillage DO, et/ou par une translation de l'outillage principal par rapport à l'outillage de maintien 20, et/ou par une poussée du spiral 1 avec un outillage plan inférieur 180 depuis la base 18 vers le sommet 19 parallèlement à l'axe d'outillage DO, puis on enlève le spiral 1, par le préhenseur 500 ou tout autre moyen adéquat, et on l'identifie en relation avec la mesure de couple effectuée.

Plus particulièrement, quand la surface inférieure 4 de la virole comporte un profil polygonal, les moyens d'entraînement 100 comportent au moins une section du fût inférieur 11, qui est agencée pour tangenter en au moins N points ce contour polygonal 5 au niveau de la position de mesure.

Plus particulièrement, les moyens d'entraînement 100 comportent au moins une surface de friction, qui est agencée pour coopérer avec la surface intérieure 4 de la virole 2 pour leur entraînement relatif par friction quand un couple est appliqué au spiral 1.

Plus particulièrement, le guide d'insertion 12 est un fût supérieur de forme sensiblement tronconique tel que, en projection sur un plan perpendiculaire au axe d'outillage DO, toute section du fût supérieur 12 est apte à s'inscrire s'inscrit à l'intérieur de l'ouverture 3 de la virole 2, notamment à l'intérieur de la surface intérieure 4, ou du contour polygonal 5 quand c'est le cas.

Dans une autre variante, après la mise en position du spiral 1 dans la position de mesure, on peut encore mettre en place, en appui sur le spiral 1 du côté du sommet 19, ou bien un troisième outillage agencé pour exercer un effort axial sur la virole 2 pour son maintien axial pendant l'opération de mesure de couple, ou bien une masse libre juste posée sur le spiral 1. Mais on comprend bien que l'avantage principal de l'invention est de pouvoir effectuer la mesure de couple du spiral avec le moins de contraintes possible sur ce spiral, aussi cette variante est réservée à des cas très particuliers, comme par exemple un spiral multiple, comportant plusieurs spires distinctes s'étendant sur plusieurs plans parallèles, ou un spiral comportant une partie hélicoïdale, ou encore une autre configuration dans laquelle une spire inférieure du spiral correctement maintenue sur le faux arbre 10 n'est pas nécessairement parallèle à une autre spire située dans un autre plan théorique et dont la spire externe 6 coopère avec l'outillage de maintien 20.

Plus particulièrement, on choisit l'outillage principal comportant un nombre N de premiers plats 110 ou de premiers dégagements 210 ménagés sur son fût inférieur 11, chacun symétrique par rapport à un plan passant par l'axe d'outillage DO, et plus particulièrement selon l'angle de cône du fût inférieur 11 quand celui-ci est conique, et, dans le prolongement des premiers plats 110, un nombre N de deuxièmes plats 120 ou de deuxièmes dégagements 220 ménagés sur son fût supérieur chacun symétrique par rapport à un plan passant par l'axe d'outillage DO, et plus particulièrement selon l'angle de cône du fût supérieur quand celui-ci est conique.

Et, lors de la dépose du spiral 1 sur le fût supérieur 12 et/ou lors de la mise en appui du spiral 1 sur le fût inférieur 11, on procède à l'alignement angulaire de plats intérieurs 50 que comporte la surface intérieure 4, ou le contour polygonal 5 quand c'est le cas, avec les premiers plats 110 ou premiers dégagements 210 d'une part, et les deuxièmes plats 120 ou deuxièmes dégagements 220 d'autre part, par mise en rotation du spiral 1 et/ou de l'outillage principal.

Plus particulièrement, on choisit l'outillage principal avec, entre son sommet 19 et les deuxièmes plats 120 ménagés sur son fût supérieur 12, ou, entre son sommet 19 et les premiers plats 110 ménagés sur son fût inférieur 11, un profil de guidage d'entrée 130 ou un profil hélicoïdal agencé pour guider de tels plats intérieurs 50 vers un appui sur les deuxièmes plats 120 ou vers les premiers plats 110.

Plus particulièrement, on choisit, pour le préhenseur 500 agencé pour effectuer la dépose par gravité du spiral 1 sur le guide d'insertion 12, un préhenseur à dépression, qui présente l'avantage d'être utilisable pour la reprise du spiral 1 une fois l'opération de mesure de couple effectuée.

Plus particulièrement, le préhenseur 500 peut constituer aussi un troisième outillage, tel qu'exposé ci-dessus et pour des cas très particuliers, pour le maintien axial de la virole 2 pendant l'opération de mesure de couple.

Plus particulièrement, on maintient l'outillage de maintien 20 fixe pendant la mesure du couple du spiral 1, et on fixe le faux arbre10 sur un porte-échappement lequel comporte des moyens pneumatiques 190 de mise en rotation du spiral 1 par un souffle d'air.

Plus particulièrement, on oriente l'outillage de maintien 20 de façon à donner un léger vrillage au moins à la spire externe 6 du spiral 1 pour créer un effet parapluie au niveau du spiral 1.

Plus particulièrement, lors de la saisie du spiral 1 par le préhenseur 500, on utilise des moyens optiques et/ou mécaniques pour orienter un plat de la surface intérieure 4, ou les plats du contour polygonal 5 selon le cas, face à d'autres plats 110 ou face à des dégagements 210, que comporte le faux arbre10.

Plus particulièrement, on applique le procédé à un spiral 1 comportant un contour polygonal 5 triangulaire, et le contact entre le faux arbre10 et la surface intérieure 4 de la virole 2 est réalisé en au moins six points concentriques.

Plus particulièrement, on applique le procédé à un spiral 1 comportant un contour polygonal 5 triangulaire, et le contact entre le faux arbre 10 et la surface intérieure 4 de la virole 2 est limité à six points concentriques.

L'invention concerne encore un posage 1000 pour la mise en oeuvre d'un procédé de mesure de couple d'un tel spiral 1, notamment un spiral en matériau micro-usinable ou en silicium, et notamment mais non limitativement pour la mise en oeuvre du procédé exposé ci-dessus.

Ce posage 1000 comporte au moins un outillage principal comportant un faux arbre10 en forme d'obélisque de section décroissante depuis sa base 18 en partie inférieure, vers son sommet 19 en partie supérieure, selon un axe d'outillage DO. Le faux arbre 10 est de section toujours croissante, selon cet axe d'outillage DO rectiligne, depuis son sommet 19 en partie supérieure où le diamètre enveloppe du faux arbre 10 est inférieur au diamètre de passage DP de la surface intérieure 4 de la virole d'un spiral 1, vers sa base 18 en partie inférieure où le diamètre enveloppe du faux arbre 10 est supérieur au diamètre de passage DP du spiral 1.

Le faux arbre10 comporte en partie supérieure au moins un guide d'insertion 12 dont toute section, en projection sur un plan perpendiculaire à l'axe d'outillage DO, s'inscrit à l'intérieur de l'ouverture 3 de la virole 2, notamment s'inscrit à l'intérieur du contour d'une surface intérieure 4 d'une virole 2 d'un spiral 1, ou d'un contour polygonal 5 quand c'est le cas.

Ce guide d'insertion 12 est agencé pour un premier centrage d'une virole 2 d'un spiral 1 déposé au niveau de la partie supérieure et laissé libre de glisser sous son propre poids le long du guide d'insertion 12, et le guide d'insertion 12 surmonte au moins un fût inférieur 11, de forme sensiblement tronconique tel qu'exposé plus haut, agencé pour achever l'auto-centrage d'une virole 2 selon l'axe d'outillage DO, et pour maintenir sans contrainte un spiral 1 sur le fût inférieur 11.

Ce fût inférieur 11 comporte des moyens d'entraînement 100, qui sont agencés pour coopérer avec une surface intérieure 4 d'une virole 2 pour l'entraînement en rotation, sans glissement, du faux arbre 10 par une virole 2 ou inversement.

Le posage 1000 comporte encore un outillage de maintien 20, qui est agencé pour la préhension d'une spire externe 6 d'un spiral 1, et des moyens de mesure 170, qui sont agencés pour effectuer une mesure de couple d'un spiral 1.

Plus particulièrement, le faux arbre 10 est rigide.

Dans une réalisation particulière, le faux arbre 10 comporte, au moins au niveau du fût inférieur 11, des lèvres élastiques au moins radialement par rapport à l'axe d'outillage DO, qui sont agencées pour venir en contact avec la surface intérieure 4 d'une virole 2.

Avantageusement, le posage 1000 comporte des moyens de translation de de l'outillage de maintien 20 parallèlement à l'axe d'outillage DO, et/ou des moyens de translation de l'outillage principal par rapport à l'outillage de maintien 20, et/ou des moyens de poussée du spiral 1 comportant un outillage plan inférieur 180 mobile parallèlement à l'axe d'outillage DO. Dans une variante, le posage 1000 comporte un tel outillage plan inférieur 180, qui est agencé mobile, selon la direction verticale du champ de gravité depuis la base 18 vers le sommet 19 ou inversement, selon la direction de l'axe d'outillage DO, pour positionner un spiral 1 dans sa position de mesure.

Plus particulièrement, les moyens d'entraînement 100 du fût inférieur 11 comportent des premiers plats 110 ou des premiers dégagements 210, qui sont agencés pour coopérer de façon complémentaire avec une surface intérieure 4 ou un contour polygonal 5 intérieur d'une virole 2 pour leur entraînement relatif quand un couple est appliqué au spiral 1.

Plus particulièrement, le posage 1000 comporte encore un troisième outillage, qui est agencé pour exercer un effort axial sur la virole 2 pour son maintien axial pendant l'opération de mesure de couple, et/ou comporte une masse libre agencée pour être juste posée sur un spiral 1, après son bon positionnement en position de mesure.

Le posage 1000 comporte avantageusement au moins un préhenseur 500, qui est agencé pour saisir un spiral 1, et le déposer sur le guide d'insertion 12 et/ou sur le premier fût inférieur. Dans une variante particulière, ce préhenseur 500 est un préhenseur 500 à dépression, agencé pour la dépose d'un spiral 1 sur ledit faux arbre 10, et/ou pour l'extraction d'un spiral 1 après la mesure.

Plus particulièrement, le posage 1000 comporte des moyens de vision aptes à piloter l'orientation angulaire du préhenseur 500 pour présenter le spiral 1 sur l'outillage principal dans une position angulaire unique indexée par rapport à l'outillage de maintien 20.

Dans une variante, l'outillage de maintien 20 est réglable en position verticale selon le champ de gravité, et/ou en vrillage.

L'invention apporte ainsi une réponse satisfaisante au risque d'égrisure, grâce à la manutention du spiral évitant tout effort local intense, et à l'absence de contrainte sure la virole, autre que le poids propre du spiral, lors de son maintien pendant l'opération de mesure de couple.

Grâce à la suppression du faux arbre cylindrique classique, le problème d'usure et pollution de l'arbre de l'outillage disparaît.

Le faux arbre de type obélisque selon l'invention évite toute insertion forcée de la virole sur le faux arbre. Le spiral est lâché librement, sans aucune contrainte, au-dessus du faux arbre. Le spiral se positionne angulairement et verticalement selon le champ de gravité par son propre poids sur le profil du faux arbre de type obélisque, ce qui permet de garantir la précision d'alignement entre la virole et le système de mesure du couple.

Enfin, le profil de forme spécifique de l'obélisque, adapté au design du profil de la virole, permet un maintien et un référencement angulaire et vertical du spiral, notamment sur six points de touche, ce qui se traduit par une mesure du couple du spiral reproductible et répétable, avec une plus grande souplesse au niveau process d'insertion automatique du spiral sur le faux axe.

Si l'invention est plus spécifiquement conçue pour résoudre les problèmes spécifiques à la mesure de couple de spiraux en silicium ou similaire, ses avantages sont tels qu'elle s'applique parfaitement au cas d'un spiral traditionnel, en acier, ou autre alliage propre aux spiraux d'horlogerie.

En somme, l'invention apporte de nombreux avantages sur les méthodes et outillages antérieurs :
- absence de contrainte mécanique lors du process de mesure du couple du spiral. Absence d'effet de serrage de la virole. Maintien en position du spiral par son propre poids ;
- absence de contrainte mécanique lors du process d'insertion du spiral sur le faux arbre, et insertion et positionnement du spiral par son propre poids ;
- profil de forme spécifique du faux arbre, de type obélisque, pour garantir une répétabilité et une reproductibilité de la mesure. Référencement angulaire et vertical du spiral sur le faux axe assurés ;
- gain en rendement. Absence d'égrisure au niveau de la mesure du couple du spiral ;
- absence de poussière ou de particule au niveau du faux arbre et de la virole, du fait de l'absence de frottement lors du process de mesure ;
- design du faux arbre, de type obélisque, permettant de s'affranchir des tolérances de fabrication de la virole, notamment en ce qui concerne ses dimensions intérieures ;
- facilité de réalisation d'un équipement automatique pour le contrôle et la mesure en automatique du couple d'un spiral en matériau micro-usinable.

## Revendications

1. Procédé de mesure de couple d'un spiral (1) d'oscillateur d'horlogerie, enroulé autour d'un axe de spiral (DS) et comportant à son extrémité externe une spire externe (6), et à son extrémité interne une virole (2) avec une ouverture (3) dont la surface intérieure (4) comporte des surfaces de centrage (41) qui sont agencées pour coopérer avec un arbre de révolution autour dudit axe de spiral (DS) et pour centrer ledit spiral (1) sur un tel arbre, et qui, à l'état libre dudit spiral (1), définissent un diamètre de passage (DP), le procédé comportant les étapes suivantes:
- on détermine les dimensions de ladite surface intérieure (4) ou dudit diamètre de passage (DP) ;
- on choisit, en fonction desdites dimensions ou dudit diamètre de passage (DP), un outillage principal comportant un faux arbre (10) de section toujours croissante, selon un axe d'outillage (DO) rectiligne, depuis son sommet (19) en partie supérieure où le diamètre enveloppe dudit faux arbre (10) est inférieur audit diamètre de passage (DP), vers sa base (18) en partie inférieure où le diamètre enveloppe dudit faux arbre (10) est supérieur audit diamètre de passage (DP), ledit faux arbre (10) comportant en partie supérieure un guide d'insertion (12) dont toute section, en projection sur un plan perpendiculaire audit axe d'outillage (DO), s'inscrit à l'intérieur de ladite ouverture (3) de ladite virole (2), et où le diamètre enveloppe dudit faux arbre (10) est toujours inférieur audit diamètre de passage (DP), ledit guide d'insertion (12) étant agencé pour un premier centrage d'une dite virole (2) d'un dit spiral (1) déposé au niveau de ladite partie supérieure et laissé libre de glisser sous son propre poids le long dudit guide d'insertion (12), et ledit guide d'insertion (12) surmontant au moins un fût inférieur (11) de forme sensiblement tronconique ou d'obélisque et qui est agencé pour achever l'auto-centrage d'une dite virole (2) selon ledit axe d'outillage (DO), et pour maintenir sans contrainte un dit spiral (1) sur ledit fût inférieur (11), et ledit fût inférieur (11) comportant des moyens d'entraînement (100) qui sont agencés pour coopérer avec une dite surface intérieure (4) d'une dite virole (2) pour l'entraînement en rotation, sans glissement, dudit faux arbre (10) par une dite virole (2) ou inversement;
- on aligne ledit axe d'outillage (DO) sur la verticale du lieu selon le champ de gravité;
- on saisit un spiral (1) à mesurer avec un préhenseur (500), avec lequel on dépose par simple gravité ledit spiral (1) à mesurer sur ledit guide d'insertion (12), et on le laisse choir sur ledit fût inférieur (11) jusqu'à son arrêt sous l'effet de son seul poids, dans une position axiale d'auto-centrage dénommée position de mesure;
- on vérifie la coaxialité dudit axe de spiral (DS) dudit spiral (1) avec ledit axe d'outillage (DO), dans ladite position de mesure ;
- quand ledit axe de spiral (DS) dudit spiral (1) est aligné avec ledit axe d'outillage (DO), dans ladite position de mesure, on met en place, à hauteur de ladite position de mesure selon la direction dudit axe d'outillage (DO), un outillage de maintien (20) qui est agencé pour la préhension de la spire externe (6) dudit spiral (1), et on fixe ladite spire externe (6) audit outillage de maintien (20) ;
- on effectue un réglage de position en hauteur dudit outillage de maintien (20) selon la direction verticale du lieu selon le champ de gravité, et on effectue, à l'aide de moyens de mesure (170), une mesure de couple dudit spiral (1) par mise en rotation, autour dudit axe d'outillage (DO), dudit outillage principal et/ou dudit outillage de maintien (20), sans contrainte dudit spiral (1).

2. Procédé selon la revendication 1, **caractérisé en ce que**, après ladite mesure, on entraîne ledit spiral (1) au-dessus dudit sommet (9) pour son évacuation, par une translation dudit outillage de maintien (20) parallèlement audit axe d'outillage (DO), et/ou par une translation dudit outillage principal par rapport audit outillage de maintien (20), et/ou par une poussée dudit spiral (1) avec un outillage plan inférieur (180) depuis ladite base (18) vers ledit sommet (19) parallèlement audit axe d'outillage (DO), et/ou par dépression à l'aide d'un préhenseur à dépression, puis on enlève ledit spiral (1) et on l'identifie en relation avec ladite mesure de couple effectuée.

3. Procédé selon la revendication 1 ou 2, **caractérisé en ce que**, quand ledit axe de spiral (DS) dudit spiral (1) n'est pas aligné avec ledit axe d'outillage (DO), dans ladite position de mesure, on exerce sur ledit spiral (1) une poussée avec un outillage plan inférieur (180) depuis ladite base (18) vers ledit sommet (19), et on réitère la mise en position, sous son seul poids, dudit spiral (1) jusqu'à alignement dudit axe de spiral (DS) avec ledit axe d'outillage (DO).

4. Procédé selon l'une des revendications 1 à 3, **caractérisé en ce qu'**on choisit, pour ledit préhenseur (500) agencé pour effectuer la dépose par gravité dudit spiral (1) sur ledit guide d'insertion (12), un préhenseur à dépression.

5. Procédé selon la revendication 4, **caractérisé en ce qu'**on utilise ledit préhenseur à dépression pour effectuer ladite évacuation dudit spiral (1) après ladite mesure.

6. Procédé selon l'une des revendications 1 à 5, **caractérisé en ce que**, en amont de la dépose dudit spiral (1) sur ledit outillage principal, on détermine sa position angulaire avec des moyens de vision avec lesquels on pilote l'orientation angulaire dudit préhenseur (500) pour présenter ledit spiral (1) sur ledit outillage principal dans une position angulaire unique dans laquelle sa spire externe (6) est positionnée dans une position unique par rapport audit outillage principal et audit outillage de maintien (20).

7. Procédé selon l'une des revendications 1 à 6, **caractérisé en ce que**, selon la gamme de mesure à appliquer, on effectue ledit réglage de position en hauteur dudit outillage de maintien (20) pour, ou bien maintenir ledit spiral (1) dans un plan, ou bien lui donner une forme en parapluie, ascendante, ou descendante, selon une valeur prédéterminée de déport et inférieure à quatre fois la hauteur des spires dudit spiral (1).

8. Procédé selon la revendication 7, **caractérisé en ce qu'**on effectue ledit réglage de position en hauteur dudit outillage de maintien (20) pour donner audit spiral une forme en parapluie, selon une valeur prédéterminée de déport inférieure ou égale à la hauteur des spires dudit spiral (1).

9. Procédé selon l'une des revendications 1 à 8, **caractérisé en ce que**, selon la gamme de mesure à appliquer, on oriente ledit outillage de maintien (20) de façon à donner un léger vrillage de valeur prédéterminée à ladite spire externe (6) dudit spiral (1).

10. Procédé selon l'une des revendications 1 à 9, **caractérisé en ce qu'**on choisit ledit outillage principal avec lesdits moyens d'entraînement (100) comportant des premiers plats (110) ou des premiers dégagements (210), agencés pour coopérer de façon complémentaire avec ladite surface intérieure (4) de ladite virole (2) pour leur entraînement relatif quand un couple est appliqué audit spiral (1) ou audit faux arbre (10).

11. Procédé selon la revendication 10, **caractérisé en ce qu'**on choisit ledit outillage principal comportant une pluralité de premiers plats (110) ou de premiers dégagements (210) ménagés sur son fût inférieur (11) chacun symétrique par rapport à un plan passant par ledit axe d'outillage (DO) et suivant, dans un plan passant par ledit axe d'outillage (D0), le profil dudit fût inférieur (11), et, dans le prolongement desdits premiers plats (110), le même nombre de deuxièmes plats (120) ou de deuxièmes dégagements (220) ménagés sur son fût supérieur (12) chacun symétrique par rapport à un plan passant par ledit axe d'outillage (DO) et suivant, dans un plan passant par ledit axe d'outillage (D0), le profil dudit fût supérieur, et **en ce que**, lors de la dépose dudit spiral (1) sur ledit fût supérieur (12) et/ou lors de la mise en appui dudit spiral (1) sur ledit fût inférieur (11), on procède à l'alignement angulaire de surfaces d'entraînement, que comporte ladite surface intérieure (4) de ladite virole (2), avec lesdits premiers plats (110) ou premiers dégagements (210) d'une part, et lesdits deuxièmes plats (120) ou deuxièmes dégagements (220) d'autre part, par mise en rotation dudit spiral (1) et/ou dudit faux arbre (10).

12. Procédé selon la revendication 10, **caractérisé en ce qu'**on choisit ledit outillage principal avec, entre son dit sommet (19) et lesdits deuxièmes plats (120) ménagés sur son fût supérieur (12), ou, entre son dit sommet (19) et lesdits premiers plats (110) ménagés sur son fût inférieur (11), un profil de guidage d'entrée (130) ou un profil hélicoïdal agencé pour guider des surfaces d'entraînement, que comporte ladite surface intérieure (4) de ladite virole (2), vers un appui sur lesdits deuxièmes plats (120) ou vers lesdits premiers plats (110).

13. Procédé selon l'une des revendications 10 à 12, **caractérisé en ce que**, lors de la saisie dudit spiral (1), et de son insertion sur ledit faux arbre (10), on pré-oriente lesdits premiers plats (110) ou premiers dégagements (210) que comporte ledit faux arbre (10), en fonction de la forme de ladite surface intérieur dudit spiral (1) dans sa position angulaire de maintien externe par ledit outillage de maintien (20).

14. Procédé selon l'une des revendications 1 à 13, **caractérisé en ce qu'**on choisit ledit outillage principal avec lesdits moyens d'entraînement (100) comportant une surface de friction agencée pour coopérer avec ladite surface intérieure (4) de ladite virole (2) pour leur entraînement relatif par friction quand un couple est appliqué audit spiral (1) ou audit faux arbre (10).

15. Procédé selon l'une des revendications 1 à 14, **caractérisé en ce qu'**on maintient ledit outillage de maintien (20) fixe pendant la mesure du couple dudit spiral (1), et **en ce qu'**on fixe ledit faux arbre (10) sur un porte-échappement lequel comporte des moyens pneumatiques (190) de mise en rotation dudit spiral (1) par un souffle d'air.

16. Procédé selon l'une des revendications 1 à 15, **caractérisé en ce qu'**on choisit ledit outillage principal avec ledit guide d'insertion (12) qui est un fût supérieur de forme sensiblement tronconique ou d'obélisque.

17. Procédé selon l'une des revendications 1 à 15, **caractérisé en ce qu'**on l'applique à la mesure de couple d'un dit spiral (1) dont ladite surface intérieure (4) de ladite virole (2) comporte au moins un plat ou un contour polygonal (5) à N côtés régulier autour de l'axe de spiral (DS) dudit spiral (1), et **en ce qu'**on choisit ledit outillage principal avec lesdits moyens d'entraînement (100) comportant au moins une section dudit fût inférieur (11), qui est agencée pour tangenter en au moins N points un dit contour polygonal (5) au niveau de ladite position de mesure.

18. Procédé selon la revendication 17, **caractérisé en ce qu'**on applique ledit procédé à un dit spiral (1) dont ledit contour polygonal (5) est triangulaire, et **en ce que** le contact entre ledit faux arbre (10) et ladite surface intérieure (4) de ladite virole (2) est réalisé en au moins six points concentriques.

19. Procédé selon la revendication 17, **caractérisé en ce qu'**on applique ledit procédé à un dit spiral (1) dont ledit contour polygonal (5) est triangulaire, et **en ce que** le contact entre ledit faux arbre (10) et ladite surface intérieure (4) de ladite virole (2) est limité à six points concentriques.

20. Procédé selon l'une des revendications 1 à 19, **caractérisé en ce qu'**on l'applique à la mesure de couple d'un dit spiral (1) en matériau micro-usinable, silicium, silicium et dioxyde de silicium, DLC, verre métallique, ou en matériau au moins partiellement amorphe.

21. Posage (1000) pour la mise en œuvre d'un procédé de mesure de couple d'un spiral (1) d'oscillateur d'horlogerie, ledit posage comportant au moins un outillage principal comportant un faux arbre (10) de section toujours croissante, selon un axe d'outillage (DO) rectiligne, depuis son sommet (19) en partie supérieure où le diamètre enveloppe dudit faux arbre (10) est inférieur audit diamètre de passage (DP), vers sa base (18) en partie inférieure où le diamètre enveloppe dudit faux arbre (10) est supérieur audit diamètre de passage (DP), ledit faux arbre (10) comportant en partie supérieure un guide d'insertion (12) dont toute section, en projection sur un plan perpendiculaire audit axe d'outillage (DO), s'inscrit à l'intérieur de ladite ouverture (3) de ladite virole (2), et où le diamètre enveloppe dudit faux arbre (10) est toujours inférieur audit diamètre de passage (DP), ledit guide d'insertion (12) étant agencé pour un premier centrage d'une dite virole (2) d'un dit spiral (1) déposé au niveau de ladite partie supérieure et laissé libre de glisser sous son propre poids le long dudit guide d'insertion (12), et ledit guide d'insertion (12) surmontant au moins un fût inférieur (11) de forme sensiblement tronconique ou d'obélisque et qui est agencé pour achever l'auto-centrage d'une dite virole (2) selon ledit axe d'outillage (DO), et pour maintenir sans contrainte un dit spiral (1) sur ledit fût inférieur (11), et ledit fût inférieur (11) comportant des moyens d'entraînement (100) qui sont agencés pour coopérer avec une dite surface intérieure (4) d'une dite virole (2) pour l'entraînement en rotation, sans glissement, dudit faux arbre (10) par une dite virole (2) ou inversement, ledit posage (1000) comportant encore un outillage de maintien (20) qui est agencé pour la préhension d'une spire externe (6) d'un dit spiral (1), et des moyens de mesure (170) agencés pour effectuer une mesure de couple d'un dit spiral (1).

22. Posage (1000) selon la revendication 21, **caractérisé en ce que** ledit faux arbre (10) est rigide.

23. Posage (1000) selon la revendication 21, **caractérisé en ce que** ledit faux arbre (10) comporte, au moins au niveau dudit fût inférieur (11), des lèvres élastiques au moins radialement par rapport audit axe d'outillage (DO), et agencées pour venir en contact avec ladite surface intérieure (4) d'une dite virole (2).

24. Posage (1000) selon l'une des revendications 21 à 23, **caractérisé en ce que** lesdits moyens d'entraînement (100) dudit fût inférieur (11) comportent des premiers plats (110) ou des premiers dégagements (210), agencés pour coopérer de façon complémentaire avec une dite surface intérieure (4) ou un dit contour polygonal (5) d'une dite virole (2) pour leur entraînement relatif quand un couple est appliqué audit spiral (1).

25. Posage (1000) selon l'une des revendications 21 à 24, **caractérisé en ce que** ledit posage (1000) comporte des moyens de translation dudit outillage de maintien (20) parallèlement audit axe d'outillage (DO), et/ou de translation dudit outillage principal par rapport audit outillage de maintien (20), et/ou des moyens de poussée dudit spiral (1) comportant un outillage plan inférieur (180) mobile parallèlement audit axe d'outillage (DO).

26. Posage (1000) selon l'une des revendications 21 à 25, **caractérisé en ce que** ledit posage (1000) comporte un outillage plan inférieur (180) agencé mobile parallèlement audit axe d'outillage (DO) pour positionner un dit spiral (1) dans ladite position de mesure.

27. Posage (1000) selon l'une des revendications 21 à 26, **caractérisé en ce que** ledit posage (1000) comporte au moins un préhenseur (500) à dépression, pour la dépose d'un dit spiral (1) sur ledit faux arbre (10), et/ou pour l'extraction d'un dit spiral (1) après ladite mesure.

28. Posage (1000) selon la revendication 27, **caractérisé en ce que** ledit posage (1000) comporte des moyens de vision aptes à piloter l'orientation angulaire dudit préhenseur (500) pour présenter ledit spiral (1) sur ledit outillage principal dans une position angulaire unique indexée par rapport audit outillage de maintien (20).

29. Posage (1000) selon l'une des revendications 21 à 28, **caractérisé en ce que** ledit outillage de maintien (20) est réglable en position verticale selon le champ de gravité, et/ou en vrillage.

## Patentansprüche

1. Verfahren zur Messung des Drehmoments einer Spiralfeder (1) eines Uhrenoszillators, die um eine Spiralachse (DS) gewickelt ist und an ihrem äußeren Ende eine äußere Windung (6) und an ihrem inneren Ende eine Spiralrolle (2) mit einer Öffnung (3) aufweist, deren Innenfläche (4) Zentrierflächen (41) aufweist, die dazu vorgesehen sind, mit einer um die Spiralachse (DS) rotationssymmetrischen Welle zusammenzuwirken und die Spiralfeder (1) auf einer solchen Welle zu zentrieren, und die im freien Zustand der Spiralfeder (1) einen Durchgangsdurchmesser (DP) definieren, wobei das Verfahren die folgenden Schritte umfasst:
- Bestimmen der Abmessungen der Innenfläche (4) oder des Durchgangsdurchmessers (DP);
- Auswählen eines Hauptwerkzeugs in Abhängigkeit von den Abmessungen oder des Durchgangsdurchmessers (DP), umfassend eine Flanschwelle (10), deren Querschnitt entlang einer geradlinigen Werkzeugachse (DO) von ihrer Spitze (19) im oberen Teil, wo der Hüllendurchmesser der Flanschwelle (10) kleiner als der Durchgangsdurchmessers (DP) ist, zu ihrer Basis (18) im unteren Teil, wo der Hüllendurchmesser der Flanschwelle (10) größer als der Durchgangsdurchmesser (DP) ist, immer größer wird, wobei die Flanschwelle (10) im oberen Teil eine Einsatzhilfe (12) aufweist, deren gesamter Querschnitt in der Projektion auf eine Ebene senkrecht zu der Werkzeugachse (DO) innerhalb der Öffnung (3) der Spiralrolle (2) liegt, und wobei der Hüllendurchmesser der Flanschwelle (10) stets kleiner als der Durchgangsdurchmesser (DP) ist, wobei die Einsatzhilfe (12) für eine erste Zentrierung einer Spiralrolle (2) einer Spiralfeder (1) ausgelegt ist, die auf Höhe des oberen Teils abgelagert ist und unter ihrem eigenen Gewicht längs der Einsatzhilfe (12) frei gleiten kann, und wobei die Einsatzhilfe (12) mindestens einen unteren Säulenschaft (11) mit einer im Wesentlichen kegelstumpfförmigen oder obeliskförmigen Gestalt überragt und dazu vorgesehen ist, die Selbstzentrierung einer Spiralrolle (2) auf die Werkzeugachse (DO) zu erzielen und eine Spiralfeder (1) auf dem unteren Säulenschaft (11) ohne Beanspruchung zu halten, und wobei der untere Säulenschaft (11) Antriebsmittel (100) aufweist, die dazu vorgesehen sind, mit einer Innenfläche (4) einer Spiralrolle (2) zusammenzuwirken, um die Flanschwelle (10) durch eine Spiralrolle (2), oder umgekehrt, gleitfrei rotatorisch anzutreiben;
- Ausrichten der Werkzeugachse (DO) auf die Vertikale des Ortes entsprechend dem Schwerkraftfeld;
- Ergreifen einer zu vermessenden Spiralfeder (1) mit einem Greifer (500), mit dem die zu vermessenden Spiralfeder (1) einfach durch die Schwerkraft auf der Einsatzhilfe (12) abgelegt wird, und Fallenlassen der Spiralfeder (1) auf den unteren Säulenschaft (11), bis sie unter der Wirkung nur ihres Gewichts in einer axialen Autozentrierungsposition, die Messposition genannt wird, anhält;
- Überprüfen der Koaxialität der Spiralachse (DS) der Spiralfeder (1) mit der Werkzeugachse (DO) in der Messposition;
- wenn die Spiralachse (DS) der Spiralfeder (1) auf die Werkzeugachse (DO) in der Messposition ausgerichtet ist, Anordnen eines Haltewerkzeugs (20), das dazu vorgesehen ist, die äußere Windung (6) der Spiralfeder (1) zu ergreifen, auf Höhe der Messposition in Richtung der Werkzeugachse (DO) und Befestigen der äußeren Windung (6) an dem Haltewerkzeug (20);
- Ausführen einer Höhenpositionseinstellung des Haltewerkzeugs (20) in der vertikalen Richtung des Ortes entsprechend dem Schwerkraftfeld und Ausführen einer Messung des Drehmoments der Spiralfeder (1) mithilfe von Messmitteln (170) durch Versetzen des Hauptwerkzeugs und/oder des Haltewerkzeugs (20) in Drehung um die Werkzeugachse (DO) ohne Beanspruchung der Spiralfeder (1).

2. Verfahren nach Anspruch 1, **dadurch gekennzeichnet, dass** nach der Messung die Spiralfeder (1) oberhalb der Spitze (9) für ihre Entnahme durch eine translatorische Bewegung des Haltewerkzeugs (20) parallel zur Werkzeugachse (DO) und/oder durch eine translatorische Bewegung des Hauptwerkzeugs in Bezug auf das Haltewerkzeug (20) und/oder durch ein Schieben der Spiralfeder (1) mit einem unteren ebenen Werkzeug (180) von der Basis (18) zu der Spitze (19) parallel zu der Werkzeugachse (DO) und/oder durch Unterdruck mithilfe eines Unterdruckwerkzeugs angetrieben wird, anschließend die Spiralfeder (1) entfernt wird und in Bezug auf die ausgeführte Messung des Drehmoments identifiziert wird.

3. Verfahren nach Anspruch 1 oder 2, **dadurch gekennzeichnet, dass** dann, wenn die Spiralachse (DS) der Spiralfeder (1) in der Messposition nicht mit der Werkzeugachse (DO) fluchtet, auf die Spiralfeder (1) mit einem unteren ebenen Werkzeug (180) ein Schub von der Basis (18) zu der Spitze (19) ausgeübt wird und das Positionieren der Spiralfeder (1) unter ihrem eigenen Gewicht so oft wiederholt wird, bis die Spiralachse (DS) mit der Werkzeugachse (DO) fluchtet.

4. Verfahren nach einem der Ansprüche 1 bis 3, **dadurch gekennzeichnet, dass** als Greifer (500), der dazu vorgesehen ist, das Ablegen durch Schwerkraft der Spiralfeder (1) auf der Einsatzhilfe (12) auszuführen, ein Unterdruckgreifer gewählt wird.

5. Verfahren nach Anspruch 4, **dadurch gekennzeichnet, dass** der Unterdruckgreifer verwendet wird, um die Entnahme der Spiralfeder (1) nach der Messung auszuführen.

6. Verfahren nach einem der Ansprüche 1 bis 5, **dadurch gekennzeichnet, dass** vor dem Ablegen der Spiralfeder (1) auf dem Hauptwerkzeug ihre Winkelposition mit Bildverarbeitungsmitteln festgestellt wird, mit denen die Winkelausrichtung des Greifers (500) gesteuert wird, um die Spiralfeder (1) auf dem Hauptwerkzeug in einer bestimmten Winkelposition, in der ihre äußere Windung (6) in einer bestimmten Position in Bezug auf das Hauptwerkzeug und das Haltewerkzeug (20) positioniert ist, zu präsentieren.

7. Verfahren nach einem der Ansprüche 1 bis 6, **dadurch gekennzeichnet, dass** entsprechend dem anzuwendenden Messbereich die Höhenpositionseinstellung des Haltewerkzeugs (20) ausgeführt wird, um entweder die Spiralfeder (1) in einer Ebene zu halten oder um ihr entsprechend einem vorbestimmten Winkelversatzwert, der kleiner als die vierfache Höhe der Windungen der Spiralfeder (1) ist, eine nach oben oder nach unten ausgerichtete Regenschirmform zu verleihen.

8. Verfahren nach Anspruch 7, **dadurch gekennzeichnet, dass** die Höhenpositionseinstellung des Haltewerkzeugs (20) ausgeführt wird, um der Spiralfeder entsprechend einem vorbestimmten Winkelversatzwert, der kleiner oder gleich der Höhe der Windungen der Spiralfeder (1) ist, eine Regenschirmform zu verleihen.

9. Verfahren nach einem der Ansprüche 1 bis 8, **dadurch gekennzeichnet, dass** entsprechend dem anzuwendenden Messbereich das Haltewerkzeug (20) so ausgerichtet wird, dass der äußeren Windung (6) der Spiralfeder (1) eine leichte Verdrehung verliehen wird.

10. Verfahren nach einem der Ansprüche 1 bis 9, **dadurch gekennzeichnet, dass** das Hauptwerkzeug mit Antriebsmitteln (100) gewählt wird, die erste Abflachungen (110) oder erste Aussparungen (210) aufweisen, die dazu vorgesehen sind, mit der Innenfläche (4) der Spiralrolle (2) komplementär zusammenzuwirken, um sie relativ anzutreiben, wenn auf die Spiralfeder (1) oder auf die Flanschwelle (10) ein Drehmoment ausgeübt wird.

11. Verfahren nach Anspruch 10, **dadurch gekennzeichnet, dass** ein Hauptwerkzeug gewählt wird, das mehrere erste Abflachungen (110) oder erste Aussparungen (210) aufweist, die an seinem unteren Säulenschaft (11) angebracht sind und wovon jede in Bezug auf eine Ebene, die durch die Werkzeugachse (DO) verläuft, symmetrisch ist und in einer Ebene, die durch die Werkzeugachse (DO) verläuft, dem Profil des unteren Säulenschafts (11) folgt, und in der Verlängerung der ersten Abflachungen (110) die gleiche Anzahl zweiter Abflachungen (120) oder zweiter Aussparungen (220) aufweist, die an seinem oberen Säulenschaft (12) angebracht sind und wovon jede in Bezug auf eine Ebene, die durch die Werkzeugachse (DO) verläuft, symmetrisch ist und in einer Ebene, die durch die Werkzeugachse (DO) verläuft, dem Profil des oberen Säulenschafts folgt, und dass beim Ablegen der Spiralfeder (1) auf dem oberen Säulenschaft (12) und/oder beim Abstützen der Spiralfeder (1) auf dem unteren Säulenschaft (11) eine Winkelausrichtung der Antriebsflächen, die die Innenfläche (4) der Spiralrolle (2) aufweist, mit den ersten Abflachungen (110) oder ersten Aussparungen (210) einerseits und mit den zweiten Abflachungen (120) oder den zweiten Aussparungen (220) andererseits durch Versetzen der Spiralfeder (1) und/oder der Flanschwelle (10) in Drehung vorgenommen wird.

12. Verfahren nach Anspruch 10, **dadurch gekennzeichnet, dass** ein Hauptwerkzeug gewählt wird, das zwischen seiner Spitze (19) und den zweiten Abflachungen (120), die an seinem oberen Säulenschaft (12) angebracht sind, oder zwischen seiner Spitze (19) und den ersten Abflachungen (110), die an seinem unteren Säulenschaft (11) angebracht sind, ein Einlassführungsprofil (130) oder ein schraubenlinienförmiges Profil aufweist, das dazu vorgesehen ist, die Antriebsflächen, die die Innenfläche (4) der Spiralrolle (2) aufweist, in Richtung einer Abstützung an den zweiten Abflachungen (120) oder in Richtung der ersten Abflachungen (110) zu führen.

13. Verfahren nach einem der Ansprüche 10 bis 12, **dadurch gekennzeichnet, dass** beim Ergreifen der Spiralfeder (1) und Anbringen auf der Flanschwelle (10) die ersten Abflachungen (110) oder die ersten Aussparungen (210), die die Flanschwelle (10) aufweist, in Abhängigkeit von der Form der Innenfläche der Spiralfeder (1) in ihrer Winkelposition, in der sie durch das Haltewerkzeug (20) von außen gehalten wird, im Voraus ausgerichtet wird.

14. Verfahren nach einem der Ansprüche 1 bis 13, **dadurch gekennzeichnet, dass** ein Hauptwerkzeug mit Antriebsmitteln (100) gewählt wird, die eine Reibungsoberfläche zum Zusammenwirken mit der Innenfläche (4) der Spiralrolle (2) aufweisen, um sie durch Reibung relativ anzutreiben, wenn auf die Spiralfeder (1) oder auf die Flanschwelle (10) ein Drehmoment ausgeübt wird.

15. Verfahren nach einem der Ansprüche 1 bis 14, **dadurch gekennzeichnet, dass** das Haltewerkzeug (20) während der Messung des Drehmoments der Spiralfeder (1) festgehalten wird und dass die Flanschwelle (10) auf einem Hemmungshalter befestigt wird, der Druckluftmittel (190) aufweist, um die Spiralfeder (1) durch einen Luftstoß in Drehung zu versetzen.

16. Verfahren nach einem der Ansprüche 1 bis 15, **dadurch gekennzeichnet, dass** das Hauptwerkzeug mit einer Einsatzhilfe (12) gewählt wird, die ein oberer Säulenschaft mit im Wesentlichen kegelstumpfartiger oder obeliskartiger Form ist.

17. Verfahren nach einem der Ansprüche 1 bis 15, **dadurch gekennzeichnet, dass** es auf die Messung des Drehmoments einer Spiralfeder (1) angewendet wird, deren Innenfläche (4) der Spiralrolle (2) mindestens eine Abflachung oder einen polygonalen Umriss (5) mit N regelmäßigen Seiten um die Spiralachse (DS) der Spiralfeder (1) aufweist, und dass das Hauptwerkzeug mit Antriebsmitteln (100) gewählt wird, die mindestens einen Abschnitt des unteren Säulenschafts (11) aufweisen, der dazu vorgesehen ist, an der Messposition einen polygonalen Umriss (5) an mindestens N Punkten tangential zu berühren.

18. Verfahren nach Anspruch 17, **dadurch gekennzeichnet, dass** das Verfahren auf eine Spiralfeder (1) angewendet wird, deren polygonaler Umriss (5) dreieckig ist, und dass der Kontakt zwischen der Flanschwelle (10) und der Innenfläche (4) der Spiralrolle (2) an mindestens sechs konzentrischen Punkten gebildet wird.

19. Verfahren nach Anspruch 17, **dadurch gekennzeichnet, dass** das Verfahren auf eine Spiralfeder (1) angewendet wird, deren polygonaler Umriss (5) dreieckig ist, und dass der Kontakt zwischen der Flanschwelle (10) und der Innenfläche (4) der Spiralrolle (2) auf sechs konzentrische Punkte begrenzt ist.

20. Verfahren nach einem der Ansprüche 1 bis 19, **dadurch gekennzeichnet, dass** es auf die Messung des Drehmoments einer Spiralfeder (1) aus einem mikrobearbeitbaren Material, aus Silizium, Silizium und Siliziumdioxid, DLC, amorphem Metall oder aus einem zumindest teilweise amorphen Material angewendet wird.

21. Aufstellanordnung (1000) für die Durchführung eines Verfahrens zur Messung des Drehmoments einer Spiralfeder (1) eines Uhrenoszillators, wobei die Aufstellanordnung mindestens ein Hauptwerkzeug umfasst, das eine Flanschwelle (10) aufweist, deren Querschnitt entlang einer geradlinigen Werkzeugachse (DO) von ihrer Spitze (19) im oberen Teil, wo der Hüllendurchmesser der Flanschwelle (10) kleiner als der Durchgangsdurchmesser (DP) ist, zu ihrer Basis (18) im unteren Teil, wo der Hüllendurchmesser der Flanschwelle (10) größer als der Durchgangsdurchmesser (DP) ist, immer größer wird, wobei die Flanschwelle (10) im oberen Teil eine Einsatzhilfe (12) aufweist, deren gesamter Querschnitt in der Projektion auf eine Ebene senkrecht zu der Werkzeugachse (DO) innerhalb der Öffnung (3) der Spiralrolle (2) liegt, und wobei der Hüllendurchmesser der Flanschwelle (10) stets kleiner als der Durchgangsdurchmesser (DP) ist, wobei die Einsatzhilfe (12) für eine erste Zentrierung einer Spiralrolle (2) einer Spiralfeder (1) ausgelegt ist, die auf Höhe des oberen Teils abgelagert ist und unter ihrem eigenen Gewicht längs der Einsatzhilfe (12) frei gleiten kann, und wobei die Einsatzhilfe (12) mindestens einen unteren Säulenschaft (11) mit einer im Wesentlichen kegelstumpfartigen oder obeliskartigen Form überragt, der dafür ausgelegt ist, die Selbstzentrierung einer Spiralrolle (2) auf die Werkzeugachse (DO) zu erzielen und eine Spiralfeder (1) an dem unteren Säulenschaft (11) ohne Beanspruchung zu halten, wobei der untere Säulenschaft (11) Antriebsmittel (100) aufweist, die dazu vorgesehen sind, mit einer Innenfläche (4) einer Spiralrolle (2) zusammenzuwirken, um die Flanschwelle (10) durch eine Spiralrolle (2), oder umgekehrt, gleitfrei rotatorisch anzutreiben, wobei die Aufstellanordnung (1000) ferner ein Haltewerkzeug (20), das dazu vorgesehen ist, eine äußere Windung (6) einer Spiralfeder (1) zu ergreifen, und Messmittel (170), die dazu vorgesehen sind, eine Messung des Drehmoments einer Spiralfeder (1) auszuführen, umfasst.

22. Aufstellanordnung (1000) nach Anspruch 21, **dadurch gekennzeichnet, dass** die Flanschwelle (10) starr ist.

23. Aufstellanordnung (1000) nach Anspruch 21, **dadurch gekennzeichnet, dass** die Flanschwelle (10) mindestens auf Höhe des unteren Säulenschafts (11) Lippen aufweist, die zumindest radial in Bezug auf die Werkzeugachse (DO) elastisch sind und so angeordnet sind, dass sie mit der Innenfläche (4) einer Spiralrolle (2) in Kontakt gelangen.

24. Aufstellanordnung (1000) nach einem der Ansprüche 21 bis 23, **dadurch gekennzeichnet, dass** die Antriebsmittel (100) des unteren Säulenschafts (11) erste Abflachungen (110) oder erste Aussparungen (210) aufweisen, die dazu vorgesehen sind, mit einer Innenfläche (4) oder mit einem polygonalen Umriss (5) einer Spiralrolle (2) komplementär zusammenzuwirken, um sie relativ anzutreiben, wenn auf die Spiralfeder (1) ein Drehmoment ausgeübt wird.

25. Aufstellanordnung (1000) nach einem der Ansprüche 21 bis 24, **dadurch gekennzeichnet, dass** die Aufstellanordnung (1000) Mittel für eine translatorische Bewegung des Haltewerkzeugs (20) parallel zur Werkzeugachse (DO) und/oder für eine translatorische Bewegung des Hauptwerkzeugs in Bezug auf das Haltewerkzeug (20) und/oder Mittel zum Schieben der Spiralfeder (1), die ein unteres ebenes Werkzeug (180) aufweisen, das parallel zu der Werkzeugachse (DO) beweglich ist, umfasst.

26. Aufstellanordnung (1000) nach einem der Ansprüche 21 bis 25, **dadurch gekennzeichnet, dass** die Aufstellanordnung (1000) ein unteres ebenes Werkzeug (180) umfasst, das parallel zur Werkzeugachse (DO) beweglich ausgelegt ist, um eine Spiralfeder (1) in der Messposition zu positionieren.

27. Aufstellanordnung (1000) nach einem der Ansprüche 21 bis 26, **dadurch gekennzeichnet, dass** die Aufstellanordnung (1000) mindestens einen Unterdruckgreifer (500) zum Ablegen einer Spiralfeder (1) auf der Flanschwelle (10) und/oder zum Entnehmen einer Spiralfeder (1) nach der Messung umfasst.

28. Aufstellanordnung (1000) nach Anspruch 27, **dadurch gekennzeichnet, dass** die Aufstellanordnung (1000) Sichtmittel umfasst, die geeignet sind, die Winkelausrichtung des Greifers (500) so zu steuern, dass die Spiralfeder (1) auf dem Hauptwerkzeug in einer bestimmten Winkelposition präsentiert wird, die in Bezug auf das Haltewerkzeug (20) indexiert ist.

29. Aufstellanordnung (1000) nach einem der Ansprüche 21 bis 28, **dadurch gekennzeichnet, dass** die vertikale Position des Haltewerkzeugs (20) entsprechend dem Schwerkraftfeld einstellbar ist und/oder das Haltewerkzeug (20) in Bezug auf seine Verdrehung einstellbar ist.

## Claims

1. Method for measuring the torque of a balance spring (1) for a timepiece oscillator, wound around a balance spring axis (DS) and comprising at its outer end an outer coil (6), and at its inner end a collet (2) with an aperture (3) whose inner surface (4) includes centring surfaces (41), which are arranged to cooperate with an arbor of revolution about said balance spring axis (DS) and to centre said balance spring (1) on such an arbor, and which, in the free state of said balance spring (1), define a passage diameter (DP), the method comprising the following steps:
- the dimensions of said inner surface (4) or of said passage diameter (DP) are determined;
- as a function of said dimensions or of said passage diameter (DP), a main tool is chosen having a mock arbor (10) of continuously increasing cross-section, on a rectilinear tool axis (DO), from its apex (19) in the upper part where the envelope diameter of said mock arbor (10) is smaller than said passage diameter (DP), to its base (18) in the lower part where the envelope diameter of said mock arbor (10) is greater than said passage diameter (DP), said mock arbor (10) comprising in the upper part an insertion guide (12), every section of which, in projection onto a plane perpendicular to said tool axis (DO), is inscribed in said aperture (3) of said collet (2), and wherein the envelope diameter of said mock arbor (10) is always smaller than said passage diameter (DP), said insertion guide (12) being arranged for a first centring of a said collet (2) of a said balance spring (1) placed on said upper part and allowed to slide freely under its own weight along said insertion guide (12), and said insertion guide (12) surmounting at least a lower shank (11) of substantially frustoconical or obelisk shape and which is arranged to complete the self-centring of a said collet (2) on said tool axis (DO), and to hold a said balance spring (2) without stress on said lower shank (11), and said lower shank (11) including drive means (100) which are arranged to cooperate with a said inner surface (4) of a said collet (2) to drive in rotation said mock arbor (10), without slipping, via a said collet (2) or vice versa;
- said tool axis (DO) is aligned on the vertical of the place in the field of gravity;
- a balance spring (1) to be measured is gripped with a gripper (500), with which said balance spring (1) to be measured is placed simply by gravity on said insertion guide (12) and allowed to drop down onto said lower shank (11) until stopped simply by the effect of its weight, in a self-centring axial position referred to as the 'measuring position';
- the coaxiality of said balance spring axis (DS) of said balance spring (1) with said tool axis (DO) is then checked in said measuring position;
- when said balance spring axis (DS) of said balance spring (1) is aligned with said tool axis (DO) in said measuring position, a holding tool (20), which is arranged to grip the outer coil (6) of said balance spring (1), is placed level with the measuring position in the direction of said tool axis (DO), and said outer coil (6) is fixed to said holding tool (20);
- an adjustment is made to the vertical position of said holding tool (20) in the vertical direction of the place in the field of gravity, and, using measuring means (170), a measurement is made of the torque of said balance spring (1) by rotating, about said tool axis (DO), said main tool and/or said holding tool (20), without stressing said balance spring (1).

2. Method according to claim 1, **characterized in that**, after said measurement, said balance spring (1) is driven above said vertex (9) in order to be removed, by a translation of said holding tool (20) parallel to said tool axis (DO), and/or by a translation of said main tool with respect to said holding tool (20), and/or by thrusting said balance spring (1) with a lower flat tool (180) from said base (18) to said vertex (19) parallel to said tool axis (DO), and/or by vacuum pressure using a vacuum gripper, and said balance spring (1) is then removed and identified in relation to said torque measurement performed.

3. Method according to claim 1 or 2, **characterized in that**, when said balance spring axis (DS) of said balance spring (1) is not aligned with said tool axis (DO), in said measuring position, a thrust force is exerted on said balance spring (1) with a lower flat tool (180) from said base (18) to said vertex (19), and the positioning of said balance spring (1) by its own weight is repeated until said balance spring axis (DS) is aligned with said tool axis (DO).

4. Method according to one of claims 1 to 3, **characterized in that** said gripper (500) arranged to place said balance spring (1) by gravity on said insertion guide (12), is chosen to be a vacuum gripper.

5. Method according to claim 4, **characterized in that** said vacuum gripper is used to carry out said removal of said balance spring (1) after said measurement.

6. Method according to one of claims 1 to 5, **characterized in that**, prior to the placing of said balance spring (1) on said main tool, the angular position thereof is determined with vision means via which the angular orientation of said gripper (500) is controlled, to present said balance spring (1) on said main tool in a unique angular position in which the outer coil (6) thereof is positioned in a unique angular position with respect to said main tool and to said holding tool (20).

7. Method according to one of claims 1 to 6, **characterized in that**, depending on the measurement range to be applied, said adjustment is made to the vertical position of said holding tool (20), either to hold said balance spring (1) in a plane, or to give it a rising or falling umbrella shape, according to a predetermined offset value which is less than four times the height of the coils of said balance spring (1).

8. Method according to claim 7, **characterized in that** said adjustment is made to the vertical position of said holding tool (20) to give said balance spring an umbrella shape, according to a predetermined offset value less than or equal to the height of the coils of said balance spring (1).

9. Method according to one of claims 1 to 8, **characterized in that**, depending on the measurement range to be applied, said holding tool (20) is oriented to give a slight twist of predetermined value to said outer coil (6) of said balance spring(1).

10. Method according to one of claims 1 to 9, **characterized in that** said main tool is chosen with said drive means (100) comprising first flat portions (110) or first recesses (210), arranged to cooperate in a complementary manner with said inner surface (4) of said collet (2) for the relative driving thereof when a torque is applied to said balance spring (1) or to said mock arbor (10).

11. Method according to claim 10, **characterized in that** said main tool is chosen to have a plurality of first flat portions (110) or first recesses (210) arranged on the lower shank (11) thereof, each one symmetrical with respect to a plane passing through said tool axis (DO) and following, in a plane passing through said tool axis (DO), the profile of said lower shank (11), and, in the extension of said first flat portions (110), the same number of second flat portions (120) or of second recesses (220) arranged on the upper shank (12) thereof, each one symmetrical with respect to a plane passing through said tool axis (DO) and following, in a plane passing through said tool axis (DO), the profile of said upper shank (12), and **in that**, when said balance spring (1) is placed on said upper shank (12) and/or when said balance spring (1) is resting on said lower shank (11), drive surfaces comprised in said inner surface (4) of said collet (2) is aligned with said first flat portions (110) or first recesses (210) on the one hand, and said second flat portions (120) or second recesses (220) on the other hand, by rotating said balance spring (1) and/or said mock arbor (10).

12. Method according to claim 10, **characterized in that** said main tool is chosen to have, between its said vertex (19) and said second flat portions (120) provided on the upper shank (12) thereof, or between its said vertex (19) and said first flat portions (110) provided on the lower shank (11) thereof, an entry guide profile (130) or a helical profile in order to guide drive surfaces comprised in said inner surface (4) of said collet (2), to rest on said second flat portions (120) or towards said first flat portions (110).

13. Method according to one of claims 10 to 12, **characterized in that**, when said balance spring (1) is gripped and inserted onto said mock arbor (10), said first flat portions (110) or first recesses (210) comprised in said mock arbor (10) are preoriented, according to the shape of said inner surface of said balance spring (1), in its angular position for external retention by said holding tool (20).

14. Method according to one of claims 1 to 13, **characterized in that** said main tool is chosen with said drive means (100) comprising a friction surface arranged to cooperate with said inner surface (4) of said collet (2) for the relative friction driving thereof when a torque is applied to said balance spring (1) or to said mock arbor (10).

15. Method according to one of claims 1 to 14, **characterized in that** said holding tool (20) is fixedly held during the measurement of the torque of said balance spring (1), and said mock arbor (10) is fixed to an escapement-holder which includes pneumatic means (190) for rotating said balance spring (1) by blowing air.

16. Method according to one of claims 1 to 15, **characterized in that** said main tool is chosen with said insertion guide (12) which is an upper shank in a substantially frustoconical or obelisk shape.

17. Method according to one of claims 1 to 15, **characterized in that** the method is applied to the measurement of the torque of a said balance spring (1) wherein said inner surface (4) of said collet (2) has at least one flat portion or a polygonal contour (5) with N regular sides around the balance spring axis (DS) of said balance spring (1), and **in that** said main tool is chosen with said drive means (100) comprising at least one section of said lower shank (11), which is arranged to be tangent to a said polygonal contour (5) at at least N points in said measuring position.

18. Method according to claim 17, **characterized in that** the method is applied to a said balance spring (1) whose polygonal contour (5) is triangular, and **in that** the contact between said mock arbor (10) and said inner surface (4) of said collet (2) is made in at least six concentric points.

19. Method according to claim 17, **characterized in that** said method is applied to a said balance spring (1) whose said polygonal contour (5) is triangular, and **in that** the contact between said mock arbor (10) and said inner surface (4) of said collet (2) is limited to six concentric points.

20. Method according to one of claims 1 to 19, **characterized in that** the method is applied to the measurement of the torque of a said balance spring (1) made of micromachinable material, silicon, silicon and silicon dioxide, DLC, metallic glass, or an at least partially amorphous material.

21. Production support tooling (1000) for implementation of a method for measuring the torque of a balance spring (1) for a timepiece oscillator, said production support tooling including at least one main tool comprising a mock arbor (10) of continuously increasing cross-section, on a rectilinear tool axis (DO), from its apex (19) in the upper part where the envelope diameter of said mock arbor (10) is smaller than said passage diameter (DP), to its base (18) in the lower part where the envelope diameter of said mock arbor (10) is greater than said passage diameter (DP), said mock arbor (10) comprising in the upper part an insertion guide (12), every section of which, in projection onto a plane perpendicular to said tool axis (DO), is inscribed in said aperture (3) of said collet (2), and wherein the envelope diameter of said mock arbor (10) is always smaller than said passage diameter (DP), said insertion guide (12) being arranged for a first centring of a said collet (2) of a said balance spring (1) placed on said upper part and allowed to slide freely under its own weight along said insertion guide (12), and said insertion guide (12) surmounting at least a lower shank (11) of substantially frustoconical or obelisk shape and which is arranged to complete the self-centring of a said collet (2) on said tool axis (DO), and to hold a said balance spring (2) without stress on said lower shank (11), and said lower shank (11) including drive means (100) which are arranged to cooperate with a said inner surface (4) of a said collet (2) to drive in rotation said mock arbor (10), without slipping, via a said collet (2) or vice versa, said production support tooling (1000) further including a holding tool (20), which is arranged to grip an outer coil (6) of a said balance spring (1), and measuring means (170) arranged to make a measurement of the torque of a said balance spring (1).

22. Production support tooling (1000) according to claim 21, **characterized in that** said mock arbor (10) is rigid.

23. Production support tooling (1000) according to claim 21, **characterized in that** said mock arbor (10) includes, at least on said lower shank (11), lips that are at least radially elastic with respect to said tool axis (DO), and arranged to come into contact with said inner surface (4) of a said collet (2).

24. Production support tooling (1000) according to one of claims 21 to 23, **characterized in that** said drive means (100) of said lower shank (11) include first flat portions (110) or first recesses (210), arranged to cooperate in a complementary manner with a said inner surface (4) or a said polygonal contour (5) of a said collet (2) for the relative driving thereof when a torque is applied to said balance spring (1).

25. Production support tooling (1000) according to one of claims 21 to 24, **characterized in that** said production support tooling (1000) includes means for translation of said holding tool (20) parallel to said tool axis (DO), and/or means for translation of said main tool with respect to said holding tool (20), and/or means for thrusting said balance spring (1) comprising a flat lower tool (180) movable parallel to said tool axis (DO).

26. Production support tooling (1000) according to one of claims 21 to 25, **characterized in that** said production support tooling (1000) includes a lower flat tool (180) arranged to be movable parallel to said tool axis (DO) to position a said balance spring (1) in said measuring position.

27. Production support tooling (1000) according to one of claims 21 to 26, **characterized in that** said production support tooling (1000) includes at least one vacuum gripper (500), for the placing of a said balance spring (1) on said mock arbor (10), and/or for the removal of a said balance spring (1) after said measurement.

28. Production support tooling (1000) according to claim 27, **characterized in that** said production support tooling (1000) includes vision means able to control the angular orientation of said gripper (500) to present said balance spring (1) on said main tool in a unique indexed angular position with respect to said holding tool (20).

29. Production support tooling (1000) according to one of claims 21 to 28, **characterized in that** the vertical position of said holding tool (20) is adjustable in the field of gravity and/or by twisting.
